# EUROPEAN PATENT APPLICATION

(11) **EP 4 797 507 A1**
(43) Date of publication of application: **26.08.2026**
(21) Application number: 26151267.7
(22) Date of filing: 12.01.2026
(51) Int. Cl.: H02K 3/52, H02K 5/22

(54) **MOTOR**

(30) Priority: 25.02.2025 KR 20250024617
(71) Applicant: Mando-Brose Corporation, Incheon 21990 (KR)
(72) Inventor: LEE, Namhoon, 18456 Hwaseong-si (KR); HEO, Jongwook, 15050 Siheung-si (KR); KIM, Sanghyun, 22394 Incheon (KR); YEO, Inyeol, 21648 Incheon (KR); KIM, Minbeom, 21969 Incheon (KR)
(74) Representative: Studio Torta S.p.A.

(57) **Abstract**

Disclosed are a motor. The motor according to the present exemplary embodiment may comprises: a stator; and a rotor configured to rotate by electromagnetic interaction with the stator, wherein the stator comprises: a stator core (10); a coil (20) wound around the stator core (10) to form a rotating magnetic field; an insulator (30) insulating the coil (20) from the stator core (10); a guide member (100) provided on one side of the stator core (10) to guide a withdrawal direction of one end of the coil (20); and a neutral terminal (200) provided on the guide member (100) and connected to the other end of the coil (20), wherein the guide member (100) comprises: a body (110) facing the coil (20); an inner guide (120) protruding axially from the body (110); and an outer guide (130)protruding axially from a radially outer side of the inner guide (120) on the body (110).

## Description

### CROSS REFERENCE TO PARENT APPLICATIONS

This application claims the benefit of Korean Patent Application Serial No. 10-2025-0024617 filed on February 25, 2025, in the Korean Intellectual Property Office, the entirety of which is incorporated herein by reference.

### BACKGROUND

### Field

The present disclosure relates to a motor, and more particularly, to a motor capable of omitting phase terminals of a stator.

### Description of the Related Art

In general, a motor includes a stator and a rotor accommodated within a housing, and induces rotation of the rotor by causing electromagnetic interaction between the stator and the rotor.

The stator may include a plurality of unit cores and coils wound around each of the unit cores. In this case, a busbar may be provided between a power source and the cores. The busbar may include three phase terminals for distributing current and a neutral terminal. The phase terminals may distribute and supply currents of the same phase to a plurality of coils arranged apart from each other, and the neutral terminal is connected to coils of each phase to function as a neutral point of the circuit.

Meanwhile, such a busbar may, in some cases, be manufactured by over-molding the phase terminals. In this case, the manufacturing process becomes complicated, and maintenance becomes difficult due to the integrated structure.

To address this, a method of separately manufacturing the body of the busbar and the phase terminals as separate components and then coupling them may be considered. However, even with such a method, the structure becomes complicated and assembly becomes difficult because sufficient insulation distance between the three phase terminals and the neutral terminal must be secured and wiring must be arranged without interference.

### SUMMARY

An object to be achieved by the present disclosure is to provide motor capable of improving assemblability and achieving cost reduction by omitting phase terminals due to a simple structure.

Another object to be achieved by the present disclosure is to provide a motor capable of securing operating reliability while implementing weight reduction of a product by suppressing an increase in volume due to a simple structure.

According to an aspect of the present disclosure, a motor comprising: a stator; and a rotor configured to rotate by electromagnetic interaction with the stator, wherein the stator comprises: a stator core; a coil wound around the stator core to form a rotating magnetic field; an insulator insulating the coil from the stator core; a guide member provided on one side of the stator core to guide a withdrawal direction of one end of the coil; and a neutral terminal provided on the guide member and connected to the other end of the coil, wherein the guide member comprises: a body facing the coil; an inner guide protruding axially from the body; and an outer guide protruding axially from a radially outer side of the inner guide on the body.

The neutral terminal is seated and supported between the inner guide and the outer guide.

The inner guide comprises at least one first fixing rib extending radially outward and supporting the neutral terminal in the circumferential direction.

The outer guide comprises at least one second fixing rib extending radially outward and supporting the neutral terminal in the circumferential direction.

At least one of the inner guide or the outer guide comprises a locking portion configured to limit axial movement of the neutral terminal.

The locking portion comprises: a support member formed by cutting out from one of the inner guide or the outer guide, and a protruding member protruding from the support member toward the other of the inner guide or the outer guide.

The inner guide and the outer guide are provided on a surface of the body opposite to the surface facing the coil.

The guide member comprises a coupling protrusion protruding from the body toward the insulator and supported by the insulator, and the insulator comprises a coupling recess formed to receive the coupling protrusion to prevent rotation of the guide member.

The guide member comprises a guideway through which said one end of the coil is inserted and passes.

The guideway extends axially and one end thereof is connected to the body.

The guideway is hollow.

The guide member comprises a reinforcing rib extending radially, one end connected to the inner guide and the other end connected to the guideway.

The body comprises a recess formed by cutting out or penetrating and through which said other end of the coil passes.

The neutral terminal comprises: a fixing portion disposed between the inner guide and the outer guide, a first connecting portion bent from one side of the fixing portion and connected to a first phase coil, a second connecting portion extending between said one side and the other side of the fixing portion and connected to a second phase coil, and a third connecting portion bent from said other side of the fixing portion and connected to a third phase coil.

The first connecting portion and the third connecting portion are bent radially outward from the fixing portion.

The second connecting portion comprises: a first section bent radially outward from the fixing portion, a second section bent from the first section and facing the fixing portion, and a third section bent radially outward from the second section and connected to the second phase coil.

The motor further comprising an insulating tube provided to cover at least a portion of the coil and insulate between coils of different phases.

The stator core comprises a plurality of teeth extending radially, the coils are each wound around at least two of the teeth, and the insulating tube covers a connection portion of each coil between the teeth around which each coil is wound.

According to the exemplary embodiment of the present disclosure, the motor can improve assemblability and achieving cost reduction by omitting phase terminals due to a simple structure.

According to the exemplary embodiment of the present disclosure, the motor can secure operating reliability while implementing weight reduction of a product by suppressing an increase in volume with a simple structure.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a perspective view illustrating a motor according to the present exemplary embodiment;
FIG. 2 is a side view illustrating a motor according to the present exemplary embodiment;
FIG. 3 is a bottom view illustrating a motor according to the present exemplary embodiment;
FIG. 4 is an exploded perspective view illustrating a guide member and a neutral terminal of a motor according to the present exemplary embodiment;
FIG. 5 is an exploded perspective view illustrating segments of a stator core and an insulator of a motor according to the present exemplary embodiment;
FIG. 6 is a perspective view, taken from a direction different from that of FIG. 5, illustrating a state in which segments of the stator core, the insulator, a coil, and a portion of an insulating tube are assembled in a motor according to the present exemplary embodiment;
FIG. 7 is a perspective view illustrating a state in which a neutral terminal is coupled to a guide member in a motor according to the present exemplary embodiment;
FIG. 8 is a plan view illustrating a guide member in a motor according to the present exemplary embodiment;
FIG. 9 is a cross-sectional view taken along line I-I of FIG. 8 and illustrating a state in which one end of the coil is guided;
FIG. 10 is a cross-sectional view illustrating a plane obtained by cutting the guide member along line II-II of FIG. 8; and
FIG. 11 is a perspective view illustrating a neutral terminal in a motor according to the present exemplary embodiment.

### DETAILED DESCRIPTION OF EMBODIMENTS

Hereinafter, exemplary embodiments of the present disclosure will be described in detail with reference to the accompanying drawings. The following exemplary embodiments are presented to sufficiently convey the idea of the present disclosure to those skilled in the art. The present disclosure is not limited only to the exemplary embodiments to be presented below, but may be embodied in other forms. In order to clarify the present disclosure, parts unrelated to the description may be omitted, and a size of components may be slightly exaggerated to aid understanding.

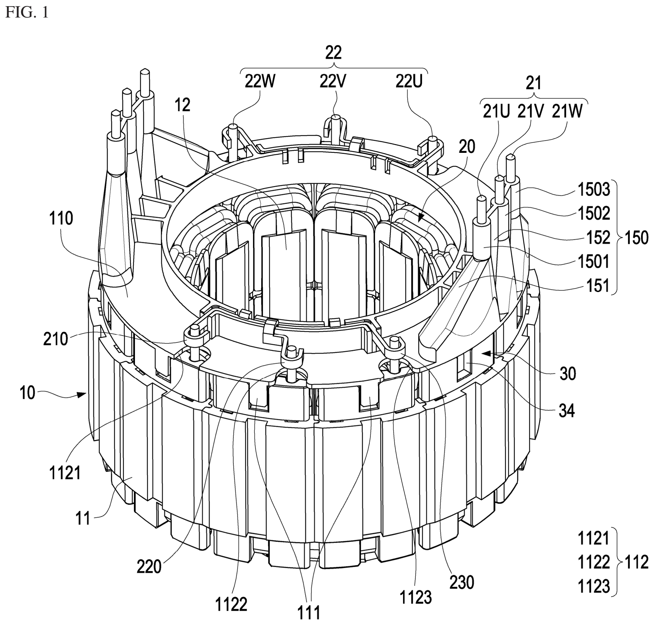

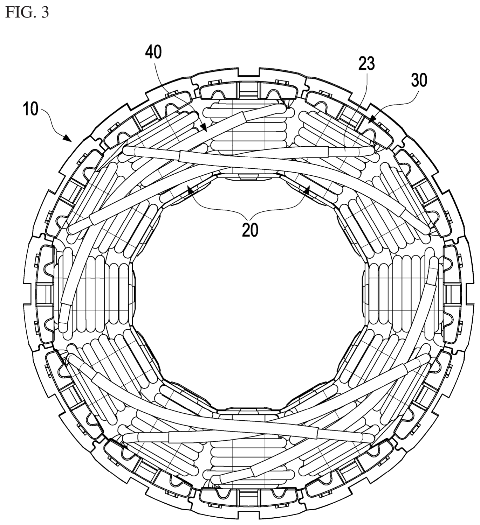

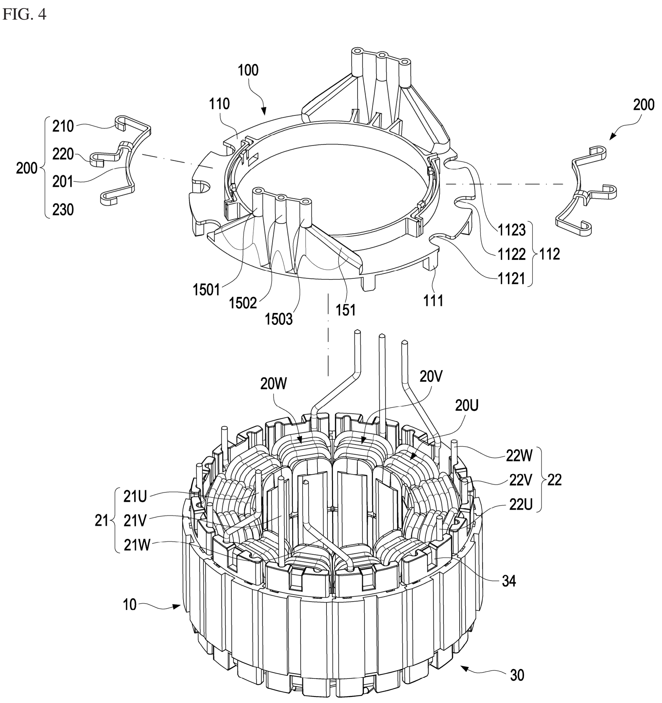

FIGS. 1 to 3 are a perspective view, a side view, and a bottom view, respectively, illustrating a motor according to the present exemplary embodiment, and FIG. 4 is an exploded perspective view illustrating a guide member 100 and a neutral terminal 200 of the motor according to the present exemplary embodiment.

Referring to FIGS. 1 to 4, the motor according to the present exemplary embodiment may comprise a housing (not shown), a stator fixed inside the housing, and a rotor (not shown) configured to rotate by electromagnetic interaction with the stator.

The housing may comprise a container (not shown) having one end opened to receive the stator and the rotor inside, and a cover (not shown) coupled to the one end of the container to seal the interior.

The rotor may comprise a rotor core (not shown), a magnet (not shown) coupled to a circumference of the rotor core or a pocket (not shown) adjacent thereto and providing polarity to the rotor, and a shaft (not shown) coupled to the rotor core and configured to rotate together therewith. And the rotor may be provided radially inward of the stator. Moreover, the shaft may extend to the outside of the housing to transmit rotational force to the outside when the motor rotates, and bearings (not shown) may be installed in the container and the cover through which the shaft passes to rotatably support the rotational shaft.

The stator may comprise a stator core 10, a coil 20 wound around the stator core 10 to form a rotating magnetic field, an insulator 30 insulating the coil 20 from the stator core 10, a guide member 100 provided on one side of the stator core 10 to guide a withdrawal direction of one end 21 of the coil, a neutral terminal 200 provided on the guide member 100 and connected to the other end 22 of the coil, and an insulating tube 40 provided to cover at least a portion of the coil 20 and insulate between coils 20 of different phases.

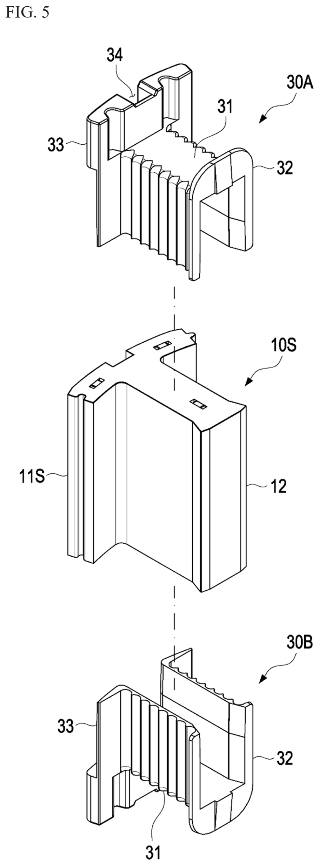

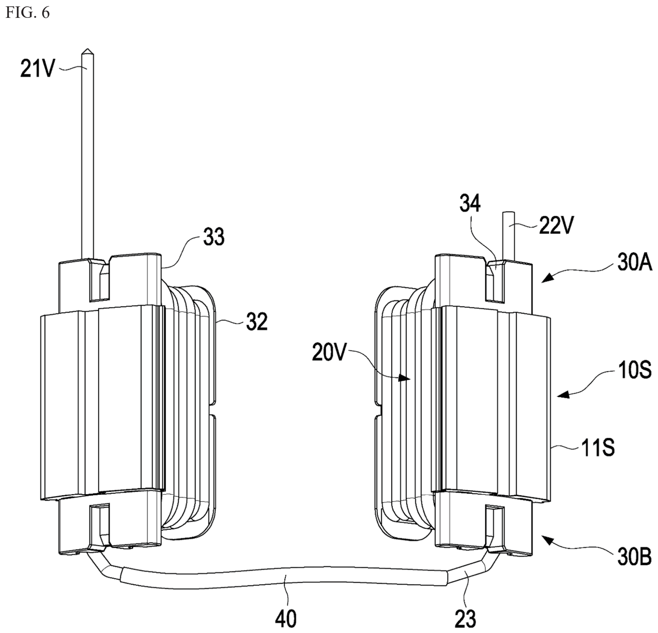

FIG. 5 is an exploded perspective view illustrating a segment 10S of the stator core 10 and the insulator 30 in the motor according to the present exemplary embodiment, and FIG. 6 is a perspective view illustrating a state in which the segment 10S of the stator core 10, the insulator 30, the coil 20, and a part of the insulating tube 40 are assembled, viewed from a different direction from FIG. 5.

Referring to FIGS. 1 to 6, the stator core 10 may be configured as an integral body or by stacking a plurality of steel sheets, and may include an approximately annular back yoke 11 and a plurality of teeth 12 extending radially inward along a circumference of the back yoke 11. Moreover, the back yoke 11 may form an annular structure by coupling a plurality of arc-shaped segments 11S. That is, the stator core 10 may be configured by coupling a plurality of segments 10S in a circumferential direction.

The stator may be fixed to the housing (not shown) as the stator core 10 is hot-press fitted into the container (not shown. To this end, the stator core 10 is press-fitted into the container in a state in which the container is heated and its inner diameter is expanded, and when the container cools and contracts while the stator core 10 remains press-fitted, an outer circumferential surface of the stator core 10 may come into close contact with an inner circumferential surface of the container, thereby being fixed.

The coil 20 is wound around the teeth 12 of the stator core 10 to form a rotating magnetic field, and the coil 20 and the stator core 10 may be insulated from each other by an insulator 30 made of a resin material.

The insulator 30 may include a first insulator 30A coupled to one end of the stator core 10, and a second insulator 30B coupled to the other end of the stator core 10. Furthermore, the first insulator 30A and the second insulator 30B may each be provided as a plurality arranged in the circumferential direction, and the plurality of first insulators 30A and second insulators 30B may be coupled together at both ends of the stator core 10.

The insulator 30 may comprise a base 31 around which the coil 20 is wound, an inner supporter 32 that supports the coil 20 wound on the base 31 from a radially inner side of the base 31, and an outer supporter 33 that supports the coil 20 wound on the base 31 from a radially outer side of the base 31.

The base 31 is inserted from the outer side toward the inner end of the stator core 10 and coupled to the teeth 12, and a concavo-convex structure may be provided on an outer surface of the base 31 to allow the coil 20 wound thereon to be seated.

The inner supporter 32 and the outer supporter 33 are each provided to extend from inner and outer ends of the base 31 in a circumferential direction toward both sides and outward of the end of the stator core 10, in order to support the coil 20 wound on the inner and outer radial sides of the base 31.

The outer supporter 33 may include a coupling recess 34 recessed at an axial end. The coupling recess 34 may receive a coupling protrusion 111 of the guide member 100, which will be described later, thereby preventing rotation of the guide member 100.

The inner supporter 32, the outer supporter 33, and the base 31 may be integrally formed during a molding process of the insulator 30.

The first insulator 30A is coupled by being inserted from the outer side to the inner side at one end of the stator core 10, and the second insulator 30B is coupled by being inserted from the outer side to the inner side at the other end of the stator core 10. Therefore, the coupling positions and coupling directions of the first insulator 30A and the second insulator 30B are opposite to each other, and in this state, the teeth 12 of the stator core 10 may be covered by the bases 31 of the first insulator 30A and the second insulator 30B.

Meanwhile, the coil 20 may comprise a first phase coil 20U, a second phase coil 20V, and a third phase coil 20W. Here, the first, second, and third phases may correspond to the U-phase, V-phase, and W-phase, respectively. Moreover, one or more coils 20 may be provided for each phase.

Each coil 20 (20U, 20V, 20W) may be wound around at least two teeth 12. Here, among the plurality of teeth 12 wound by a single coil 20, at least some of the teeth 12 are not adjacent to each other on the stator core 10.

For example, when the first phase coil 20U is wound around a pair of teeth 12, a tooth 12 wound by the second phase coil 20V and a tooth 12 wound by the third phase coil 20W may be disposed between the pair of teeth 12 wound by the first phase coil 20U, respectively. Therefore, a connecting portion 23 is formed between the plurality of teeth 12 wound by each coil 20 (20U, 20V, 20W).

At this time, interference of the connecting portions 23 may occur between coils 20 of different phases.

In order to prevent interference between coils 20 of different phases, the insulating tube 40 may cover the connecting portions 23 of each coil 20 (20U, 20V, 20W) between the plurality of teeth 12 around which each coil 20 is wound, and may insulate coils 20 of different phases from each other. The insulating tube 40 may be fitted and coupled to the coils 20 or may be provided in the form of a tape and wound around the connecting portions 23. In this way, operating reliability of the motor can be secured.

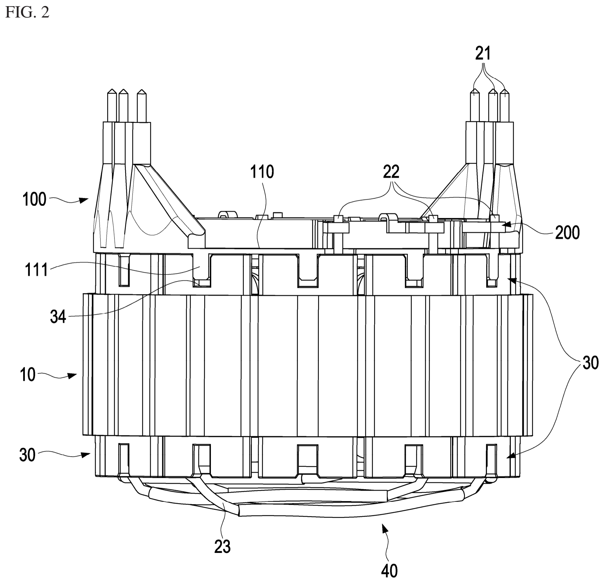

One end 21 (21U, 21V, 21W) and the other end 22 (22U, 22V, 22W) of each coil 20 (20U, 20V, 20W) may be drawn out to one side of the stator core 10 (upper side in FIG. 2). At this time, each coil end 21 (21U, 21V, 21W) may be directly connected to a power source such as an inverter of a control device (not shown) to receive current of the U-phase, V-phase, and W-phase, respectively. Moreover, each coil other end 22 (22U, 22V, 22W) may be connected to the neutral terminal 200.

The plurality of teeth 12 on the stator core 10 may be sequentially wound with the first phase coil 20U, the second phase coil 20V, and the third phase coil 20W. At this time, the ends 21 (21U, 21V, 21W) of the coils of each phase may be arranged adjacent to each other. Accordingly, the other ends 22 (22U, 22V, 22W) of the coils of each phase may also be arranged adjacent to each other. In this way, an increase in volume of the neutral terminal 200 can be suppressed, thereby contributing to weight reduction and cost reduction of the motor.

Hereinafter, a structure and shape of the guide member 100 for guiding a withdrawal direction of the coil end 21 will be described.

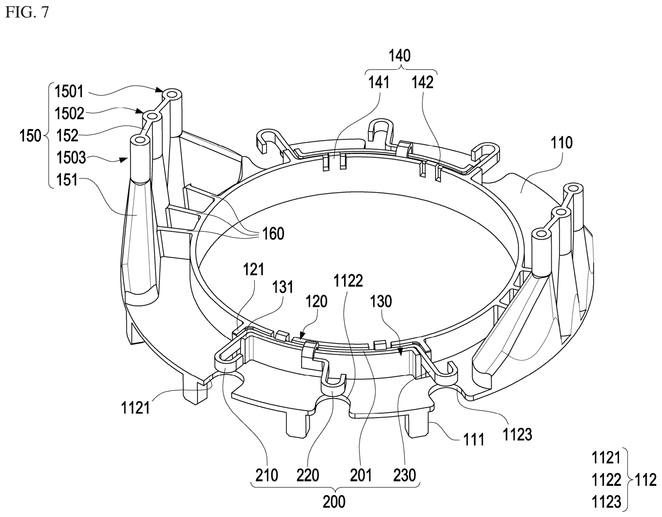

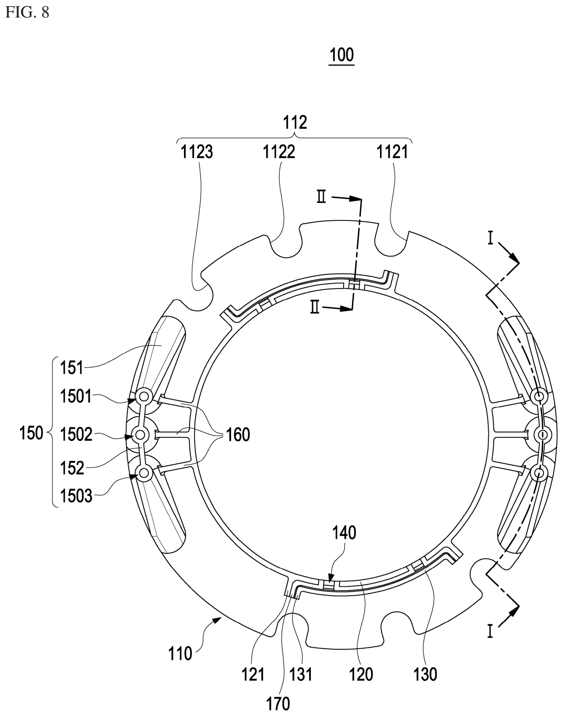

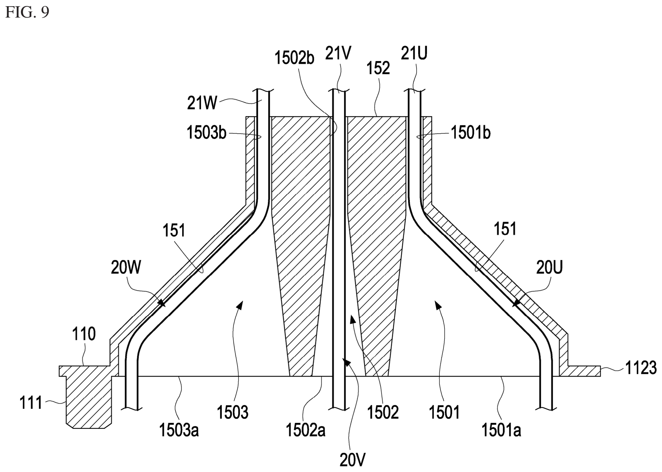

FIG. 7 is a perspective view illustrating a state in which the neutral terminal 200 is coupled to the guide member 100 in the motor according to the present exemplary embodiment, FIG. 8 is a plan view illustrating the guide member 100 in the motor according to the present exemplary embodiment, and FIG. 9 is a cross-sectional view taken along line I-I of FIG. 8, illustrating a state in which the coil end 21 is guided.

Referring to FIGS. 1, 4, and 7 to 9, the guide member 100 may be provided on one side (upper side in FIG. 2) of the stator core 10 to guide a withdrawal direction of the coil end 21. To this end, the guide member 100 may comprise a body 110, one side of which faces the coil 20 and an outer circumferential side supported by the insulator 30, and a guideway 150 through which the coil end 21 is inserted and passes.

The body 110 may be made of a resin material and may be formed approximately in an annular shape. One side of the body 110 may include a coupling protrusion 111 protruding toward the insulator 30. The coupling protrusion 111 may be inserted and coupled into a coupling recess 34 of the insulator 30, thereby preventing rotation of the guide member 100 and enhancing a coupling force between the insulator 30 and the guide member 100.

The guideway 150 may extend in an axial direction, and one end thereof may be connected to the opposite surface (upper surface in FIG. 2) of the body 110. The coil 20 is inserted into the one end of the guideway 150, passes through, and is drawn out from the other end. To this end, the guideway 150 may be provided in a hollow shape.

The guideway 150 may be configured such that diameters of inlets 1501a, 1502a, and 1503a, into which the coil ends 21 enter, are larger than diameters of outlets 1501b, 1502b, and 1503b, from which the coil ends 21 are withdrawn. Accordingly, the coil ends 21 may smoothly enter the guideway 150 while being precisely drawn toward the control device, thereby improving assemblability.

A plurality of guideways 150 may be provided, each allowing one of the first to third phase coils 20 (20U, 20V, 20W) to be inserted and pass through. For example, the plurality of guideways 150 may include a first guideway 1501 into which the first phase coil 20U is inserted, a second guideway 1502 into which the second phase coil 20V is inserted, and a third guideway 1503 into which the third phase coil 20W is inserted.

The coil ends 21 of each phase coil 20 may be drawn out adjacent to each other while passing through the first guideway 1501, the second guideway 1502, and the third guideway 1503. To this end, the first guideway 1501 may include an inclined portion 151 inclined toward the second guideway 1502 between the inlet 1501a and the outlet 1501b. Similarly, the third guideway 1503 may include an inclined portion 151 inclined toward the second guideway 1502 between the inlet 1503a and the outlet 1503b. In this way, the first, second, and third guideways 1501, 1502, and 1503 cooperate to draw the coil ends 21 (21U, 21V, 21W) of each phase adjacent to each other, thereby minimizing a volume of the power supply to which the coils 20 are connected on the control device, and contributing to weight reduction and cost reduction.

However, the present exemplary embodiment is not limited thereto. The second guideway 1502 and the third guideway 1503 may include inclined portions 151 toward the first guideway 1501, or the first guideway 1501 and the second guideway 1502 may include inclined portions 151 toward the third guideway 1503.

Moreover, the guide member 100 may extend in the axial direction and include a first reinforcing rib 152 connecting both sides in the circumferential direction to adjacent guideways 150. The first reinforcing rib 152 may enhance stiffness of the guideways 150. Alternatively, the guideways 150 may be integrally formed, and guide holes into which the coils 20 (20U, 20V, 20W) are inserted may be formed through the guide member 100.

In addition, the body 110 may include a recess 112 formed to penetrate or be cut through the outer circumferential side to allow passage of the coil other ends 22 (22U, 22V, 22W). As shown in the drawings, a plurality of recesses 112 may be provided, through which other ends of coils of different phases 22 (22U, 22V, 22W) can pass.

The recesses 112 may include a first recess 1121 through which the first phase coil other end 22U passes, a second recess 1122 through which the second phase coil other end 22V passes, and a third recess 1123 through which the third phase coil other end 22W passes. At this time, the coupling protrusion 111 may be provided along the circumference of the body 110 between an adjacent guideway 150 and a recess 112, or between adjacent recesses 112.

Meanwhile, although not shown in the drawings, the guideways 150 may be provided without the inclined portions 151. In this case, the coupling protrusion 111 may be provided along the circumference of the body 110 between an adjacent guideway 150 and a recess 112, or between adjacent guideways 150. Moreover, the first to third recesses 1121, 1122, 1123 may be integrally formed, allowing all other ends of the three-phase coils 22 (22U, 22V, 22W) to pass through. In this way, a volume of the body 110 can be reduced, thereby contributing to weight reduction.

Hereinafter, the shape of the guide member 100 and the coupling structure with the neutral terminal 200 will be described.

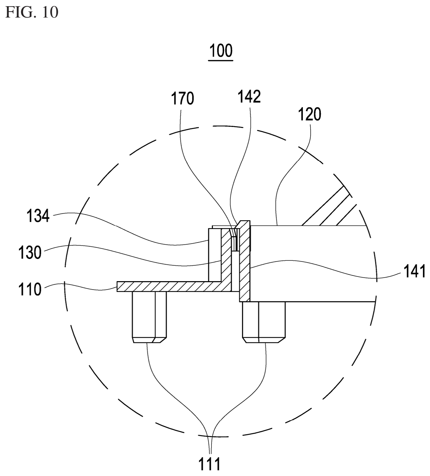

FIG. 10 is a cross-sectional view showing the guide member 100 cut along line II-II of FIG. 8.

Referring to FIGS. 1, 4, 7, 8, and 10, the guide member 100 may include an inner guide 120 protruding in the axial direction from the body 110, an outer guide 130 protruding in the axial direction from the radial outer side of the inner guide 120 on the body 110, a locking portion 140 for limiting axial movement of the neutral terminal 200, and fixing ribs extending in the radial direction.

The inner guide 120 may be disposed adjacent to the inner circumferential side on the opposite side of the body 110 from the surface facing the coil 20, and may be generally ring-shaped. However, the present exemplary embodiment is not limited thereto, and as long as it cooperates with the outer guide 130 to support the neutral terminal 200, it may have linear, arcuate, or other shapes.

The outer guide 130 may be disposed radially outside the inner guide 120 on the opposite surface of the body 110. Accordingly, the neutral terminal 200 may be seated on the opposite surface of the body 110 between the inner guide 120 and the outer guide 130, so that axial movement is limited by the cooperation of the inner guide 120 and the outer guide 130.

In order for the neutral terminal 200 to be connected to the coil other end 22 from the radial outer side of the outer guide 130, the outer guide 130 may be formed in an arcuate shape. However, it is not limited thereto, and it may be formed in a shape corresponding to the inner guide 120 so as to support the neutral terminal 200 in cooperation with the inner guide 120.

The size of the gap between the inner guide 120 and the outer guide 130 is preferably the same as the radial thickness of the neutral terminal 200, in particular the fixing portion 201 described later, but it may be slightly larger or smaller.

The locking portion 140 may include a support member 141 cut from one of the inner guide 120 or the outer guide 130 and a protruding member 142 protruding from the support member 141 toward the other of the inner guide 120 or the outer guide 130.

The support member 141 may be cut from both sides of the inner guide 120 or the outer guide 130. In order for the axial movement of the neutral terminal 200 to be limited by being disposed between the protruding member 142 and the opposite surface of the body 110, the support member 141 may extend axially more than the inner guide 120 as needed. In this way, since the support member 141 is formed by cutting both sides, it can be easily deformed when the neutral terminal 200 is coupled to the guide member 100, thereby improving assemblability.

The protruding member 142 may protrude from the end of the support member 141 toward the outer guide 130 or the inner guide 120. At this time, the protruding member 142 does not necessarily have to protrude from the end of the support member 141, but this can minimize the volume of the support member 141.

When the neutral terminal 200 is coupled to the guide member 100, one surface (the lower surface in FIG. 10) of the protruding member 142 may face or contact the neutral terminal 200. Accordingly, the opposite surface of the body 110 and the surface of the protruding member 142 can cooperate to limit axial movement of the neutral terminal 200.

Meanwhile, the one of the inner guide 120 and the outer guide 130 on which the locking portion 140 is not formed may include a chamfer (not designated by a reference numeral) tapered at the end of the surface opposite to the one where the locking portion 140 is formed. In this way, when coupling the neutral terminal 200 to the guide member 100, assemblability can be improved while alleviating deformation of the locking portion 140, thereby enhancing durability.

The fixing ribs may include at least one of a first fixing rib 121 extending radially outward from the inner guide 120 and a second fixing rib 131 extending radially outward from the outer guide 130.

In FIG. 7, a pair of the first fixing ribs 121 and a pair of the second fixing ribs 131 are illustrated, respectively contacting one side and the other side of the neutral terminal 200 to limit circumferential movement. However, the present exemplary embodiment is not limited thereto. The neutral terminal 200 may be coupled between a pair of first fixing ribs 121, and the pair of first fixing ribs 121 may limit circumferential movement of the neutral terminal 200 by contacting the opposing sides along the nearby circumference.

Alternatively, the neutral terminal 200 may be coupled outside a pair of second fixing ribs 131, and the opposing sides of the pair of second fixing ribs 131 along the nearby circumference may contact the neutral terminal 200 to limit its circumferential movement.

Moreover, the first fixing rib 121 and the second fixing rib 131 may cooperate on one side or the other side of the neutral terminal to limit circumferential movement of the neutral terminal 200.

Alternatively, the fixing ribs may not extend radially from the inner guide 120 or the outer guide 130, but may protrude axially from the body 110. However, when the fixing ribs extend from the inner guide 120 or the outer guide 130, an advantage of improved stiffness of the guide member 100 is obtained.

In this way, the guide member 100 can prevent rotation by the coupling protrusion 111 being inserted into the coupling groove 34 of the insulator 30, and can support the neutral terminal 200 in the radial, axial, and circumferential directions to limit its movement. As a result, the neutral terminal 200 is reliably connected to the coil other end 22, ensuring the operational reliability of the motor.

Meanwhile, the guide member 100 may include a stepped portion 170 protruding from the body 110 between the inner guide 120 and the outer guide 130. By making the height of the stepped portion 170 different from that of the opposite surface of the body 110, the neutral terminal 200 and the body 110 may be spaced apart when the neutral terminal 200 is coupled to the guide member 100. The stepped portion 170 may also be provided between the first fixing rib 121 and the second fixing rib 131, thereby supporting the first connection portion 210 and the third connection portion 230 described later.

In addition, the guide member 100 may include a second reinforcing rib 160 extending radially, with one end connected to the inner guide 120 and the other end connected to the guideways 150. A plurality of second reinforcing ribs 160 may be provided, and each of the plurality of reinforcing ribs may have its other end connected to the first guideway 1501, the second guideway 1502, or the third guideway 1503. Through these second reinforcing ribs 160, stiffness of the guide member 100 can be improved.

The body 110, the coupling protrusion 111, the recesses 112, the inner guide 120, the outer guide 130, the locking portion 140, the guideways 150, the second reinforcing ribs 160, and the stepped portion 170 may be integrally formed during a molding process of the guide member 100.

Hereinafter, the shape and structure of the neutral terminal 200 will be described.

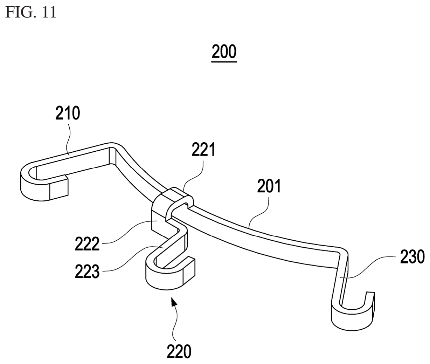

FIG. 11 is a perspective view showing the neutral terminal 200 according to the present exemplary embodiment.

Referring to FIGS. 1, 4, 7, and 11, the neutral terminal 200 may include a fixing portion 201 disposed between the inner guide 120 and the outer guide 130, a first connection portion 210 bent from one side of the fixing portion 201 and connected to the first phase coil 20U, a second connection portion 220 extending between one side and the other side of the fixing portion 201 and connected to the second phase coil 20V, and a third connection portion 230 bent from the other side of the fixing portion 201 and connected to the third phase coil 20W.

The fixing portion 201 forms the body of the neutral terminal 200 and may be provided in an arcuate shape, but the present exemplary embodiment is not limited thereto. The fixing portion 201 may be formed in a curved shape, linear shape, or other shapes as needed. Furthermore, the fixing portion 201 is coupled between the inner guide 120 and the outer guide 130 and can be supported in the radial and axial directions.

The first connection portion 210 and the third connection portion 230 are bent radially outward from one side (right side in FIG. 11) and the other side (left side in FIG. 11) of the fixing portion 201, respectively. The ends of the first connection portion 210 and the third connection portion 230 may be bent, so that, when the motor is assembled, they can wrap the other ends of the first phase coil 20U and the third phase coil 20W. In addition, the first connection portion 210 and the third connection portion 230 may be disposed between the first fixing rib 121 and the second fixing rib 131 and supported in the circumferential direction.

The second connection portion 220 may include a first section 221 bent outward from between one side and the other side of the fixing portion 201, a second section 222 bent from the first section 221 and facing the fixing portion 201, and a third section 223 bent radially outward from the second section 222 and connected to the second phase coil 20V.

The first section 221 extends axially from the fixing portion 201 while being bent radially outward. When the neutral terminal 200 is coupled to the guide member 100, the first section 221 can be supported in the axial direction by the outer guide 130.

The second section 222 may be provided in a substantially L-shaped form, and when the neutral terminal 200 is coupled to the guide member 100, the outer guide 130 may be disposed between the second section 222 and the fixing portion 201. Accordingly, it can be supported in the radial direction by the outer guide 130. However, the shape of the second section 222 is not limited thereto, and the third section 223 may be bent even if the second section 222 does not extend circumferentially, and may include various other shapes that allow connection to the other end of the second phase coil 20V.

The third section 223 has a bent end that can wrap the other end of the second phase coil 20V. In this way, the neutral terminal 200 can be stably connected to the coil 20, ensuring operational reliability.

Thus, the motor according to the present exemplary embodiment can, through the shapes and coupling structures of the guide member 100 and the neutral terminal 200, wind each coil 20 (20U, 20V, 20W) around at least two teeth 12, and arrange the first ends of the three-phase coils (21: 21U, 21V, 21W) adjacent to each other. Accordingly, the first ends of the three-phase coils (21: 21U, 21V, 21W) can be easily connected to the control device (not shown), allowing omission of phase terminals and thereby improving assemblability and reducing cost.

## Claims

1. A motor, comprising:
a stator; and
a rotor configured to rotate by electromagnetic interaction with the stator,
wherein the stator comprises:
a stator core (10);
a coil (20) wound around the stator core (10) to form a rotating magnetic field;
an insulator (30) insulating the coil (20) from the stator core (10);
a guide member (100) provided on one side of the stator core (10) to guide a withdrawal direction of one end of the coil (20); and
a neutral terminal (200) provided on the guide member (100) and connected to the other end of the coil (20),
wherein the guide member (100) comprises:
a body (110) facing the coil (20);
an inner guide (120) protruding axially from the body (110); and
an outer guide (130) protruding axially from a radially outer side of the inner guide (120) on the body (110).

2. The motor of claim 1, wherein the neutral terminal (200) is seated and supported between the inner guide (120) and the outer guide (130).

3. The motor of claim 2, wherein the inner guide (120) comprises
at least one first fixing rib extending radially outward and supporting the neutral terminal (200) in the circumferential direction.

4. The motor of claim 2 or 3, wherein the outer guide (130) comprises
at least one second fixing rib extending radially outward and supporting the neutral terminal (200) in the circumferential direction.

5. The motor of claim 2, 3 or 4, wherein at least one of the inner guide (120) or the outer guide (130) comprises
a locking portion configured to limit axial movement of the neutral terminal (200).

6. The motor of claim 5, wherein the locking portion comprises:
a support member formed by cutting out from one of the inner guide (120) or the outer guide (130), and
a protruding member protruding from the support member toward the other of the inner guide (120) or the outer guide (130).

7. The motor of any one of claims 2 to 6, wherein the inner guide (120) and the outer guide (130) are provided on a surface of the body (110) opposite to the surface facing the coil (20).

8. The motor of any one of claims 1 to 7, wherein
the guide member (100) comprises a coupling protrusion protruding from the body (110) toward the insulator (30) and supported by the insulator (30), and
the insulator (30) comprises a coupling recess formed to receive the coupling protrusion to prevent rotation of the guide member (100).

9. The motor of any one of claims 1 to 8, wherein the guide member (100) comprises
a guideway through which said one end of the coil (20) is inserted and passes.

10. The motor of claim 9, wherein the guideway extends axially and one end thereof is connected to the body.

11. The motor of claim 10, wherein the guideway is hollow.

12. The motor of claim 9, 10 or 11, wherein the guide member (100) comprises
a reinforcing rib extending radially, one end connected to the inner guide (120) and the other end connected to the guideway.

13. The motor of any one of claims 1 to 12, wherein the body (110) comprises
a recess formed by cutting out or penetrating and through which said other end of the coil (20) passes.

14. The motor of any one of claims 1 to 13, wherein the neutral terminal (200) comprises:
a fixing portion (201) disposed between the inner guide (120) and the outer guide (130),
a first connecting portion bent from one side of the fixing portion (201) and connected to a first phase coil,
a second connecting portion extending between said one side and the other side of the fixing portion (201) and connected to a second phase coil, and
a third connecting portion bent from said other side of the fixing portion (201) and connected to a third phase coil.

15. The motor of claim 14, wherein the second connecting portion comprises:
a first section bent radially outward from the fixing portion (201),
a second section bent from the first section and facing the fixing portion (201), and
a third section bent radially outward from the second section and connected to the second phase coil.
